Europäisches Patentamt

European Patent Office

Office européen des brevets

(11) Veröffentlichungsnummer : **0 162 974 B1**

(12) # EUROPÄISCHE PATENTSCHRIFT

(45) Veröffentlichungstag der Patentschrift :
17.05.89

(51) Int. Cl.⁴ : **B 27 N   9/00**

(21) Anmeldenummer : 84201963.0

(22) Anmeldetag : 30.10.84

(54) Verfahren zur Herstellung von Holzformkörpern.

(30) Priorität : 05.11.83 DE 3340080
05.05.84 DE 3416662
05.10.84 DE 3436507

(43) Veröffentlichungstag der Anmeldung :
04.12.85 Patentblatt 85/49

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
DE--A-- 1 528 258
DE--A-- 1 903 936

(73) Patentinhaber : HOECHST AKTIENGESELLSCHAFT
Postfach 80 03 20
D-6230 Frankfurt am Main 80 (DE)

SAUERLÄNDER SPANPLATTEN GmbH & Co. KG
D-5760 Arnsberg 2 (DE)

(72) Erfinder : Fuchs, Fritz-Reichard, Dr.
Richard-Wagner-Strasse 51
D-7410 Reutlingen (DE)
Erfinder : Staendeke, Horst, Dr.
Alte Honrather Strasse 22
D-5204 Lohmar (DE)

(74) Vertreter : von Grunelius, Sigmund, Dr.
Hoechst AG, Werk Knapsack Postfach 2902
D-5030 Hürth (DE)

EP 0 162 974 B1

**Beschreibung**

Die vorliegende Erfindung betrifft ein Verfahren zur Herstellung von Holzformkörpern im Strangpreßverfahren nach dem Oberbegriff des Patentanspruches 1.

Derartige Strangpreßverfahren sind beispielsweise Gegenstand der DE-C-949 902, der DE-C-973 801 sowie der DE-B-1 198 545. Bei diesen Strangpreßverfahren beträgt der mittlere Preßdruck in der Strangpresse im allgemeinen 0,5 bis 2,0 N/mm² und liegt die Temperatur der Heizplatten bei etwa 100 bis 250 °C.

Als Holzformkörper kommen beispielsweise Rundstäbe, Vierkantprofile und dergleichen, insbesondere aber Spanplatten, in Betracht.

Als geeignete Flammschutzmittel für die Herstellung schwerentflammbarer Holzspanplatten werden in John W. Lyons « The Chemistry and Uses of Fire Retardants » (Wiley Interscience New York, 1970, Seiten 122 ff.) folgende Produkte angeführt :

Monoammoniumphosphat oder Diammoniumphosphat, ggf. in Kombination mit Harnstoff oder Harnstoff/Formaldehyd-Harzen ;

Magnesiumchlorid oder Magnesiumbromid in Kombination mit Magnesiumoxid ;

Chlorparaffine in Kombination mit Antimon (III)-oxid ;

Borsäure, ggf. in Kombination mit Antimon (III)-oxid.

Außerdem sind als Flammschutzmittel für Holzspanplatten schon vorgeschlagen worden :

Gemäß DE-A-2 933 755 und DE-A-3 044 861 Umsetzungsprodukte von Colemanit mit Mineralsäuren wie Schwefelsäure oder Phosphorsäure ;

gemäß US-A-4 080 501 ein Melaminphosphat ;

nach US-A-3 939 107 ein wasserlösliches Ammoniumpolyphosphat und

gemäß JP 73 213 46 (referiert in C. A. 81,4837y) Gemische aus PVC, Ammoniumpolyphosphat und Harnstoff/Formaldehyd-Harz oder Phenol/Formaldehyd-Harz.

Erfahrungsgemäß sind diese vorgenannten Flammschutzmittel nur wirksam bei Einsatz zur Flammfestausrüstung von Spanplatten in Form von Flachspanplatten. Sie eignen sich jedoch nicht für den Einsatz zur Flammfestausrüstung von nach dem Strangpreßverfahren hergestellten Holzformkörpern, insbesondere Spanplatten, da bei diesem Verfahren die Temperatur- und Druckbedingungen erheblich sind.

Andererseits ist aus der DE-C-1 224 917 ein Verfahren zur Behandlung von Holzspänen und anderen Spänen pflanzlicher Herkunft mit Binde- und/oder Imprägnierungsmitteln zwecks Herstellung von Platten und anderen Formteilen bekannt. Dort ist auch ausgesagt, daß Zusätze von Holz- und Flammschutzmitteln in Pulverform nicht die erforderliche gleichmäßige Verteilung erbrachten und sich außerdem nachteilig auf die Bindung und die Festigkeitswerte der Enderzeugnisse auswirkten, so daß entsprechenden Verfahren eine praktische Bedeutung versagt blieb. Gemäß DE-C-1 224 917 wurde daher vorgeschlagen, die Späne für kurze Zeit mit einer Lösung, Dispersion oder Emulsion der Behandlungsmittel in Form einer Flotte zusammenzubringen, was nachteilig zur Folge hatte, daß zunächst in einer Zentrifuge eine weitgehende Befreiung von der flüssigen Phase stattfinden und anschließend vor der Weiterverarbeitung noch getrocknet werden mußte. Eine solche Flotte konnte beispielsweise aus einer wäßrigen Lösung von Monoammoniumphosphat als Flammschutzmittel bestehen.

Schließlich ist aus der DE-A-2 949 537 ein teilchenförmiges Mittel zur Verhinderung der Brennbarkeit von brennbaren Stoffen wie Polyurethanen oder Polyurethanschäumen auf der Basis von freifließenden, pulverförmigen Ammoniumpolyphosphaten bekannt, wobei die einzelnen Teilchen des Ammoniumpolyphosphates mit einem gehärteten, wasserunlöslichen Polykondensationsprodukt aus Melamin und Formaldehyd umhüllt (mikroverkapselt) sind.

Aufgabe vorliegender Erfindung ist es, im Strangpreßverfahren aus Holzspänen und/oder holzartigen Faserstoffen hergestellte Holzformkörper schwerentflammbar zu machen. Diese Aufgabe wird durch die Merkmale des Patentanspruches 1 gelöst.

Die nachfolgenden Beispiele dienen zur näheren Erläuterung der Erfindung, wobei sich die Beispiele 1 bis 7 mit Tabellen 1 und 2 auf Strangpreßplatten und die Beispiele 8 bis 11 mit Tabelle 3 auf furnierte oder beschichtete Strangpreßplatten beziehen.

Beispiel 1 (Stand der Technik)

In einem Mischer wurden

100 kg trockene Holzspäne
25 kg Flammschutzmittel auf Basis Colemanit nach DE-A-3 044 861, Beispiel 4
9,1 kg ®Kaurit-Leim 365 flüssig (Firma BASF Aktiengesellschaft, Ludwigshafen)
1,8 kg Härter 29-Lösung (Firma BASF Aktiengesellschaft, Ludwigshafen) als 15 %ige wäßrige Lösung

intensiv gemischt und dann in eine Strangpresse nach DE-C-973 801 oder DE-B-1 198 545 eingebracht. Die Temperatur der Heizplatten betrug 130 °C.

Der Versuch mußte abgebrochen werden, weil sich die Mischung in der Presse verdichtete, ohne daß ein Strang extrudiert wurde.

### Beispiel 2 (Stand der Technik)

Es wurde analog Beispiel 1 gearbeitet mit der Abänderung, daß 30 kg des entsprechenden Flammschutzmittels eingesetzt wurden, und daß die Heizplattentemperatur 135 °C betrug.

Der Versuch mußte aus den in Beispiel 1 angegebenen Gründen vorzeitig abgebrochen werden.

### Beispiel 3 (Stand der Technik)

Es wurde analog Beispiel 1 gearbeitet mit der Abänderung, daß 30 kg des entsprechenden Flammschutzmittels eingesetzt wurden, und daß die Heizplattentemperatur 150 °C betrug.

Der Versuch mußte aus den in Beispiel 1 angegebenen Gründen vorzeitig abgebrochen werden.

### Beispiel 4 (Stand der Technik)

In einem Mischer wurden

100 kg trockene Holzspäne
10 kg Borsäure
9,1 kg ®Kaurit-Leim 365 flüssig (Firma BASF Aktiengesellschaft, Ludwigshafen)
1,8 kg Härter 29-Lösung (Firma BASF Aktiengesellschaft, Ludwigshafen) als 15 %ige wäßrige Lösung

intensiv gemischt und der in Beispiel 1 beschriebenen Strangpresse zugeführt. Die Temperatur der Heizplatten betrug 130 °C.

Der Versuch mußte aus den in Beispiel 1 angegebenen Gründen vorzeitig abgebrochen werden.

### Beispiel 5

In einem Mischer wurden

100 kg trockene Holzspäne
20 kg ®Exolit 422 (HOECHST Aktiengesellschaft, Frankfurt/Main)
— hierbei handelt es sich um ein feinkörniges, in Wasser schwer lösliches Ammoniumpolyphosphat der Formel $(NH_4PO_3)_n$, wobei n ~ 700 ist ; die Teilchengröße des Ammoniumpolyphosphates beträgt > 99 % < 45 μm —

gemischt und anschließend mit einer Leimflotte, bestehend aus

10,8 kg ®Kaurit-Leim 365 flüssig (BASF Aktiengesellschaft, Ludwigshafen)
3,0 kg Wasser
2,2 kg Härter 29-Lösung (BASF Aktiengesellschaft, Ludwigshafen) als 15 %ige wäßrige Lösung
1,6 kg flüssiger Härter 527 (BASF Aktiengesellschaft, Ludwigshafen)
0,8 kg Wachsemulsion ®Mobilcer 65 (Firma Mobil Oil AG, Hamburg)

bedüst.

Nach einer Nachmischzeit von 2 Minuten wurde das Gemisch einer Strangpresse (siehe hierzu Beispiel 1) zugeführt ; die Heizplattentemperatur betrug 170 °C.

Die mechanische Stabilität der 23 mm-Röhrenspanplatte war zu gering, so daß eine weitere Untersuchung der Platte nicht durchgeführt wurde.

### Beispiel 6

In einem Mischer wurden

100 kg trockene Holzspäne
19 kg ®Exolit 456 (Firma HOECHST AKTIENGESELLSCHAFT, Frankfurt/Main)
— hierbei handelt es sich um das in vorliegender Erfindung verwendete Flammschutzmittel, bei dem die einzelnen Ammoniumpolyphosphatteilchen mit einem gehärteten, wasserunlöslichen Überzug aus polykondensiertem Melamin und Formaldehyd versehen sind ; die Herstellung dieses Flammschutzmittels erfolgte gemäß DE-A-2 949 537 ; der Phosphorgehalt des Mittel beträgt 29,5 Gew% und der wasserlösliche Anteil bei 25 °C weniger als 0,5 Gew% —

vorgemischt und dann mit einer Leimflotte, bestehend aus

10,8 kg ®Kaurit-Leim 365 flüssig (Firma BASF Aktiengesellschaft, Ludwigshafen)
3,0 kg Wasser
2,2 kg Härter 29-Lösung (Firma BASF Aktiengesellschaft, Ludwigshafen) als 15 %ige wäßrige Lösung
1,6 kg flüssiger Härter 527 (Firma BASF Aktiengesellschaft, Ludwigshafen)
0,8 kg Wachsemulsion ®Mobilcer 65 (Firma Mobil Oil Aktiengesellschaft, Hamburg)

bedüst.

Nach einer Nachmischzeit von 2 Minuten wurde das Gemisch einer Strangpresse zugeführt und bei einer Temperatur von 170 °C zu Röhrenspanplatten von 23 mm Dicke verarbeitet.

Die Ergebnisse der analytischen Untersuchungen, der mechanischen Prüfungen und der Brandprüfung sind in den Tabellen 1 und 2 aufgeführt.

## Beispiel 7

Es wurde analog Beispiel 6 gearbeitet mit der Abänderung, daß 2,4 kg Wachsemulsion eingesetzt wurden.

Die Ergebnisse der analytischen Untersuchungen, der mechanischen Prüfungen und der Brandprüfung sind in den Tabellen 1 und 2 aufgeführt.

Zusammenfassend ist zu den erfindungsgemäßen Beispielen 6 und 7 festzustellen, daß die nach dem erfindungsgemäßen Verfahren hergestellten Röhrenspanplatten in überraschender Weise sowohl die mechanischen Prüfanforderungen der DIN 68764 als auch die brandtechnischen Erfordernisse der DIN 4102 — Klasse B 1 erfüllen.

## Beispiel 8 (Vergleichsbeispiel)

Eine nach Beispiel 6 hergestellte 23 mm-Röhrenspanplatte der Baustoffklasse B 1 gemäß DIN 4102 wurde unter folgenden Bedingungen in einer Einetagenpresse überfurniert:

Furnierart : Koto

Leimansatz :
100 Gewichtsteile ®Kaurit 285 (Firma BASF Aktiengesellschaft, Ludwigshafen)
10 Gewichtsteile Härter-70-Lösung (Firma BASF Aktiengesellschaft, Ludwigshafen) als 15 %ige wäßrige Lösung
20 Gewichtsteile Roggenmehl (Typ 1370)
8 Gewichtsteile Wasser

Preßbedingungen :
Preßtemperatur : 140 °C
Preßzeit : 1,2 min
Preßdruck : 6 bar
Leimauftrag : 200-250 g/m²

Oberflächenbearbeitung :
Schleifen mit 140/180 K und anschließendes Lackieren mit ®Flammex S 44-Einkomponentenlack (Firma Jordan Lacke GmbH & Co. KG, Würzburg) bei einer Auftragsmenge von 120 g/m².
Jede 2. Röhre wurde durch einen etwa 4 mm breiten Schlitz zur Sichtseite geöffnet.

Die Ergebnisse der Brandprüfung sind in Tabelle 3 aufgeführt.

## Beispiel 9 (Vergleichsbeispiel)

Es wurde analog Beispiel 8 gearbeitet mit der Abänderung, daß anstelle der dort angegebenen Leimflotte mit einem Weißleim auf Basis Polyvinylacetat gearbeitet wurde.

Furnierart : Koto

Leim : ®Polytex 307 (Firma Zika, Chemische Fabrik, Pfullingen)

Preßbedingungen :
Preßtemperatur : 140 °C
Preßzeit : 2,5 min

Preßdruck : 6 bar
Leimauftrag : 250 bis 300 g/m²

Die Ergebnisse der Brandprüfung sind in Tabelle 3 aufgeführt.

Beispiel 10

Es wurde analog Beispiel 8 gearbeitet mit der Abänderung, daß anstelle der dort angegebenen Leimflotte mit folgendem Leimansatz gearbeitet wurde :

Furnierarten : Kiefer, Tanne, Eiche, Rüster, Teak, Mutenye

Leimansatz :
100 Gewichtsteile ®Kauramin 541 (Firma BASF Aktiengesellschaft, Ludwigshafen)
 20 Gewichtsteile Roggenmehl (Typ 1370)
 . 4 Gewichtsteile Härter 29-Lösung (Firma BASF Aktiengesellschaft, Ludwigshafen) als 25 %ige wäßrige Lösung

Preßbedingungen :
Preßtemperatur : 140 °C
Preßzeit : 2 min
Preßdruck : 6 bar
Leimauftrag : 200-250 g/m²

Oberflächenbearbeitung :
Schleifen mit 140/180 K und anschließendes Lackieren mit ®Flammex S 44-Einkomponenten-Lack oder Rölit-Einverfahrenslack 280 sgl (Firma Zimmermann und Fechter GmbH Lackfabrik, Frankfurt)
Jede 2. Röhre wurde durch einen etwa 4 mm breiten Schlitz zur Sichtseite geöffnet.

Die Ergebnisse der Brandprüfung sind in Tabelle 3 aufgeführt.

Beispiel 11

Es wurde analog Beispiel 10 gearbeitet mit der Abänderung, daß anstelle des Holzfurniers eine Schichtpreßstoffplatte Typ ®Resopal F der Fa. Resopal Werk H. Römmler GmbH, Groß-Umstadt aufgebracht wurde.
Die Ergebnisse der Brandprüfung sind in Tabelle 3 aufgeführt.

(Siehe Tabellen Seite 6 ff.)

5

Tabelle 1 : Analytische Untersuchungen und mechanische Prüfungen

| Probematerial | Rohdichte (kg/m$^3$) | Phosphor-gehalt (% P) | Wasser-gehalt (% $H_2O$) | Quellung nach 1 Stunde (%) | Zugfestigkeit[1] (N/mm$^2$) | Biegefestigkeit[2] (N/mm$^2$) |
|---|---|---|---|---|---|---|
| Beispiel 6 | 730 | 3,8 | 5,5 | 5,6 | 0,85 | 4,9 |
| Beispiel 7 | 780 | 4,1 | 5,5 | 4,6 | 0,75 | 9,9 |
| DIN 68764-Anforderungen | ohne Angabe | ohne Angabe | ohne Angabe | ohne Angabe | 0,40 | 4,0 |

[1] parallel zur Herstellrichtung
[2] rechtwinklig zur Herstellrichtung

EP 0 162 974 B1

Tabelle 2 : Brandschachtprüfung nach DIN 4102

| Probematerial | max. Flammen-höhe (cm) | max. Rauchgas-temperatur (°C) | mittlere Rest-länge (cm) | Rauchgas-dichte [1] | DIN 4102-Klasse |
|---|---|---|---|---|---|
| Beispiel 6 | 80 | 129 | 27 | 26 | B 1 |
| Beispiel 7 | 90 | 139 | 18 | 13 | B 1 |
| DIN 4102-Anforderungen | < 100 | < 200 | > 15 | ohne Angabe | |

[1] gemessen als minimale Transmission in %

EP 0 162 974 B1

Tabelle 3 : Brandschachtprüfung gemäß DIN 4102

| Probematerial | Furnier bzw. Beschichtung | max. Rauchgas-temperatur ($^o$C) | mittlere Rest-länge (cm) | DIN 4102-Klasse |
|---|---|---|---|---|
| Beispiel 8 (Vergleichsbeispiel) | Koto | > 200 | 0 | B2 |
| Beispiel 9 (Vergleichsbeispiel) | Koto | 186 | 12 | B2 |
| Beispiel 1o (erfindungsgemäß) | Kiefer Tanne Teak Mutenye Rüster Eiche | 148 125 147 135 131 161 | 21 27 17 2o 16 2o | B1 B1 B1 B1 B1 B1 |
| Beispiel 11 (erfindungsgemäß) | ® Resopal F | 128 | 2o | B1 |
| DIN 4102-Anforderungen | ohne Angabe | < 200 | > 15 | |

EP 0 162 974 B1

## Patentansprüche

1. Verfahren zur Herstellung von Holzformkörpern, insbesondere Spanplatten, wobei Holzspäne, holzartige Faserstoffe oder deren Gemische nach Zusatz eines Bindemittels und gegebenenfalls weiterer Stoffe wie Härter oder Gleitmittel lose in eine Strangpresse eingebracht werden und darin zwischen auf Temperaturen von 100 bis 250 °C beheizten Platten bei Drucken von 0,5 bis 2,0 N/mm² zu Holzformkörpern, insbesondere plattenförmigen Strängen, verarbeitet werden, dadurch gekennzeichnet, daß als weiterer Zusatz ein Flammschutzmittel in einer Menge von 5 bis 50 Gew%, bezogen auf die trockenen Holzspäne und/oder die holzartigen Faserstoffe, eingebracht wird, wobei das Flammschutzmittel ein feinkörniges, in Wasser schwerlösliches, mit Melamin/Formaldehyd-Harzen mikroverkapseltes Ammoniumpolyphosphat mit einem Phosphorgehalt von 29,0 ± 1,0 % und einem Stickstoffgehalt von 16,5 ± 1,0 % ist.

2. Verfahren nach Anspruch 1, dadurch gekennzeichnet, daß man auf die Holzformkörper, insbesondere Spanplatten, zu ihrer Beplankung geeignete Deck- und Absperrfurniere aus Holz oder Schichtpreßstoffplatten mit Hilfe eines Klebers verleimt, wobei man als Kleber Kondensationsprodukte auf Basis Phenol/Melamin/Harnstoff-Formaldehyd oder Isocyanate verwendet.

3. Verfahren nach Anspruch 2, dadurch gekennzeichnet, daß man auf die Oberfläche der beplankten Holzformkörper, insbesondere Spanplatten, eine Schicht aus einem schwerentflammbaren Lack aufbringt.

4. Verfahren nach Anspruch 3, dadurch gekennzeichnet, daß man als Lack transparente, schwerentflammbare Einkomponentenlacke verwendet.

## Claims

1. A process for producing wooden profiles, in particular chipboards, in which wood chips, wood-like fibrous materials or mixtures of these, after addition of a binding agent and possibly other materials such as curing agents or lubricants, are introduced loose into an extruder and are processed therein between plates heated to temperatures of 100 to 250 °C at pressures of 0.5 to 2.0 N/mm² into wooden profiles, in particular into sheet-like extrudates, wherein a flame retardant is introduced as a further additive in a quantity of 5 to 50 % by weight, based on the dry wood chips and/or the wood-like fibrous materials, the flame retardant being an ammonium polyphosphate of fine particle size, which is sparingly soluble in water, and is microencapsulated by melamine/formaldehyde resins, the ammonium polyphosphate having a phosphorus content of 29.0 ± 1.0 % and a nitrogen content of 16.5 ± 1.0 %.

2. The process as claimed in claim 1, wherein face veneers and cross-band veneers suitable for their covering made from wood or laminated sheets are stuck on the wooden profiles, in particular chipboards, using an adhesive, where condensation products based on phenol/melamine/ureaformaldehyde or isocyanates are used as adhesive.

3. The process as claimed in claim 2, wherein a layer of flame-resistant paint is applied to the surface of the covered wooden profiles, particularly chipboards.

4. The process as claimed in claim 3, wherein a transparent, flame-resistant single component paint is used as paint.

## Revendications

1. Procédé pour la fabrication d'objets moulés en bois, en particulier de panneaux de copeaux dans lequel on introduit librement dans une boudineuse des copeaux de bois, des matières fibreuses du type du bois ou leurs mélanges, après adjonction d'un liant et le cas échéant d'autres matières telles que des durcisseurs ou des lubrifiants, et on les transforme dans la boudineuse, entre des plaques chauffées à des températures de 100 à 250 °C, sous des pressions de 0,5 a 2,0 N/mm², en objets moulés en bois, en particulier en boudins en forme de plaques, caractérisé en ce que l'on introduit en tant qu'autres additifs un agent ignifugeant en quantité de 5 à 50 % en poids par rapport aux copeaux de bois et/ou aux matières fibreuses du type du bois, secs, l'agent ignifugeant étant un polyphosphate d'ammonium à une teneur en phosphore de 29,0 ± 1,0 % et une teneur en azote de 16,5 ± 1,0 %, insoluble dans l'eau, en grains fins, microencapsulés dans des résines mélanine/formaldéhyde.

2. Procédé selon la revendication 1, caractérisé en ce que l'on colle sur les objets moulés en bois, en particulier les panneaux de copeaux, des placages de couverture et de barrière, appropriés à leur bordure, en bois ou en panneaux de stratifiés, à l'aide d'une colle, la colle consistant en produits de condensation à base phénol/mélanine/urée-formaldéhyde ou isocyanates.

3. Procédé selon la revendication 2, caractérisé en ce que l'on applique à la surface des objets moulés en bois plaqués, en particulier les panneaux de copeaux, une couche d'un vernis inflammable.

4. Procédé selon la revendication 3, caractérisé en ce que l'on utilise en tant que vernis des vernis à un composant transparents et ininflammables.